(19)

Europäisches
Patentamt
European
Patent Office
Office européen
des brevets

(11) **EP 3 263 307 B1**

(12) **EUROPEAN PATENT SPECIFICATION**

(45) Date of publication and mention
of the grant of the patent:
**31.07.2019 Bulletin 2019/31**

(21) Application number: **16772343.6**

(22) Date of filing: **17.03.2016**

(51) Int Cl.:
**B29D 30/06** (2006.01)    **B29C 33/02** (2006.01)
**B29C 35/02** (2006.01)    **B60C 11/00** (2006.01)
**B60C 11/03** (2006.01)    **B60C 11/12** (2006.01)
**B29D 30/68** (2006.01)

(86) International application number:
**PCT/JP2016/058531**

(87) International publication number:
**WO 2016/158460 (06.10.2016 Gazette 2016/40)**

(54) **TIRE MOLD MOLDING ELEMENT, TIRE VULCANIZATION MOLDING MOLD, AND TIRE**

GUSSFORMELEMENT FÜR REIFENFORM, GUSSFORM FÜR REIFENVULKANISIERUNG UND
REIFEN

ÉLÉMENT DE MOULAGE DE MOULE DE PNEUMATIQUE, MOULE DE MOULAGE POUR
VULCANISATION DE PNEUMATIQUE, ET PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2015 PCT/JP2015/060181**

(43) Date of publication of application:
**03.01.2018 Bulletin 2018/01**

(73) Proprietor: **Compagnie Générale des
Etablissements Michelin
63000 Clermont-Ferrand (FR)**

(72) Inventor: **KANEKO, Shuichi
Tokyo 163-1073 (JP)**

(74) Representative: **Regimbeau
20, rue de Chazelles
75847 Paris Cedex 17 (FR)**

(56) References cited:
**EP-A1- 1 533 141        EP-A1- 2 072 286
WO-A1-2014/051528    WO-A1-2014/102076
WO-A1-2014/102076    WO-A1-2014/198654
JP-A- H1 080 923        JP-A- 2005 153 870
JP-A- 2005 262 973    JP-A- 2009 149 297
JP-A- 2012 529 393    JP-A- 2015 500 157
JP-A- 2015 505 754**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

[Technical Field]

The present invention relates to a tire molding element, a tire vulcanization mold comprising said molding element, and a tire vulcanization molded by means of said mold.

[Prior Art]

A tire tread has been proposed in WO 03/089257 and WO 2013/088570, for example, in which a covering layer comprising a material different than the rubber composition forming the main portion of a ground contact element is used in order to cover a part or all of the ground contact element, with the aim of improving specific performance, among various aspects of performance which are required in a tire.

A tire molding element has been proposed in order to form this kind of tire tread, wherein a blade is provided between two thin plates having a cutting means for cutting the covering layer arranged on an unvulcanized green tire, and the covering layer is arranged on a transverse side surface of the blade (Patent Document 1).

A tire molding element has also been proposed with the aim of reducing stress in a deep portion of a ground contact element when the tire is rolling, the stress being due to the presence of a covering layer, wherein a bulge is provided on an end portion of a thin plate and a cutting means protrudes from the bulge (Patent Document 2).

Furthermore, a tire molding element has been proposed in which a covering layer is arranged at a predetermined position on a side surface of thin plates without the use of a blade for arranging the covering layer, by providing a protrusion that protrudes in the thickness direction of the thin plates (Patent Document 3).

[Prior Art Documents]

[Patent Documents]

[Patent Document 1] WO 2013/087826
[Patent Document 2] WO 2014/198654
[Patent Document 3] WO 2014/102076

[Summary of the Invention]

[Problems to be Solved by the Invention]

With the tire molding elements described in Patent Documents 1 and 2, however, it is necessary to provide a blade between two thin plates so there is a problem in that the degree of freedom in arranging the covering layer is reduced.

Furthermore, with the tire molding element described in Patent Document 3, there is a problem in that if the covering layer cannot be cut simultaneously by the cutting means, the covering layer is likely to be rolled up on either of the thin plates and there is a risk of instability in the arrangement of the covering layer.

The present invention has been devised in order to solve the abovementioned problems in the prior art, and the aim thereof lies in providing a tire molding element which enables a covering layer to be arranged at a predetermined position with greater stability on a ground contact element of a tire, while enabling a greater degree of freedom in the arrangement of the covering layer, and also in providing a tire vulcanization mold comprising said molding element, and a tire vulcanization molded by means of said mold.

[Means for Solving the Problems]

In the present specification, the term "green tire" refers to an article in which a plurality of strip-like or sheet-like semifinished rubber products or semifinished non-rubber products comprising or not comprising a reinforcing material are laminated in order to obtain a vulcanization molded tire using a mold (die).

Furthermore, the term "mold" means a collection of separate molding elements which are arranged close together so as to define a toroidal molding space.

Furthermore, the term "molding element" means a portion of a mold, e.g., a mold segment.

Furthermore, the term "molding surface" means a mold surface intended for molding a tire tread.

Furthermore, the term "thin plate" means a plate-like protrusion that protrudes in order to mold an incision in a tire tread. The thickness of the thin plate in the region of the molding surface is a maximum of around 2 mm; the incision molded in the tread by means of the thin plate is also referred to as a "sipe" or the like, and this "sipe" may also be partially closed off within the ground contact surface.

Furthermore, the term "cutting means" means a projecting portion that projects from the thin plate or the molding surface, and this projecting portion is able to cut the covering layer that covers the green tire.

In order to achieve the abovementioned aim, the present invention provides a tire molding element for vulcanization molding a tire tread, characterized in that the tire molding element comprises: a molding surface for molding a plurality of ground contact elements of the tread, comprising a ground contact surface which contacts a road surface, and a transverse side surface and a circumferential side surface connected to said ground contact surface; and thin plates comprising a main body, provided in such a way as to cut a covering layer arranged in advance on an unvulcanized green tire, at least one thin plate comprises a protrusion which protrudes from the main body in the thickness direction of the thin plate and guides the cut covering layer in the depth direction of the green tire in such a way as to cover at least a portion of the transverse side surface of the ground contact element, and at least two adjacent thin plates comprise an enlarged-width portion provided at an end portion on the opposite side to the molding surface, and a cutting means protruding from the enlarged-width portion toward the opposite side to the molding surface.

According to the present invention having the configuration described above, thin plates comprising a main body are provided with a protrusion that protrudes from the main body of said thin plates in the thickness direction of the thin plates, said thin plates being provided in such a way as to cut a covering layer without the use of the blade described in abovementioned Patent Documents 1 and 2 etc., so the cut covering layer arranged in advance on an unvulcanized green tire is guided in the green tire depth direction by means of the protrusion on the thin plates, and therefore it is possible to increase the degree of freedom in the arrangement of the covering layer that covers a ground contact element on a tire.

In addition, according to the present invention, at least two adjacent thin plates comprise an enlarged-width portion provided at an end portion on the opposite side to the molding surface, and a cutting means protruding from the enlarged-width portion toward the opposite side to the molding surface, and therefore the covering layer which has been cut by the cutting means remains in a space on the opposite side to the molding surface in the region of maximum width of the enlarged-width portion between two enlarged-width portions, after which the covering layer is pushed out in the direction of the molding surface by means of the green tire, then caught by means of the protrusion protruding in the thickness direction of the thin plates, and guided in the depth direction of the green tire in such a way as to cover at least a portion of the transverse side surface of the ground contact element, and therefore even if the covering layer has not been simultaneously cut by the cutting means, it is still possible to reduce the risk of the covering layer being dragged by the thin plate on the wrong side, and the covering layer can be stably arranged at a predetermined position with greater reliability.

According to the present invention, a thickness-direction distance H between enlarged-width portions of adjacent thin plates is preferably between 40% and 90% of a distance L between main body center lines of adjacent thin plates.

According to the present invention having the configuration described above, it is possible to arrange the covering layer stably at a predetermined position with greater reliability. Specifically, according to the present invention, the thickness-direction distance H between enlarged-width portions of adjacent thin plates is set at no less than 40% of the distance L between main body center lines of adjacent thin plates, and therefore it is possible to prevent the covering layer cut to a predetermined length by the cutting means from deforming under excessive stress while it remains in a space between two enlarged-width portions on the opposite side to the molding surface in the region of maximum width of the enlarged-width portions, and the covering layer can be stably arranged at a predetermined position with greater reliability. Meanwhile, the distance H is set at no greater than 90% of the distance L, and therefore it is possible to reduce the risk of the covering layer 10 being dragged by the thin plate 5 on the wrong side. The thickness-direction distance H between enlarged-width portions of adjacent thin plates is more preferably between 50% and 90% of the distance L between main body center lines of adjacent thin plates.

According to the present invention, an angle A between an imaginary line parallel to the molding surface passing through an end portion on the cutting means side of the enlarged-width portion of the thin plates, and an imaginary line joining the maximum width portion of the enlarged-width portion and the end portion on the cutting means side, is preferably between 10° and 80°.

According to the present invention having the configuration described above, it is possible to arrange the covering layer stably at a predetermined position with greater reliability. That is to say, if the angle A is smaller than 10°, the cut covering layer remaining in the space on the opposite side to the molding surface in the region of maximum width between enlarged-width portions of two thin plates is not readily pushed out in the molding surface direction, the cut covering layer deforms as a result of a large amount of stress being applied thereto, and there is a risk of it not being possible to stably arrange the covering layer at a predetermined position; on the other hand, if this angle A is greater than 80°, the cut covering layer does not readily remain in the space on the opposite side to the molding surface in the region of maximum width between enlarged-width portions of two plates, and there is a risk of it not being possible to stably arrange the covering layer at a predetermined position, so the abovementioned range is preferred. This angle A is more preferably between 30° and 70°, and even more preferably between 45° and 60°. It should be noted that the absolute value of this angle A is more preferably equal between enlarged-width portions of two adjacent thin plates, or the difference between angles is no greater than 10°.

According to the present invention, the cross-sectional shape from the end portion on the cutting means side of the enlarged-width portion of the thin plates to the maximum width portion is preferably arcuate.

According to the present invention, the cross-sectional shape from the end portion on the cutting means side of the enlarged-width portion of the thin plates to the maximum width portion is preferably linear.

According to the present invention having the configuration described above, the space between enlarged-width portions of two thin plates on the opposite side to the molding surface in the region of maximum width decreases linearly toward the molding surface, so it is possible to arrange the covering layer stably at a predetermined position with greater reliability.

According to the present invention, the cross-sectional shape of the enlarged-width portion of the thin plates has line symmetry, taking the main body center line as a reference.

According to the present invention having the configuration described above, the enlarged-width portion of the thin plates which is exposed to the greatest amount of stress during vulcanization molding and which is in contact with the green tire for the longest time has a stable shape in relation to the thin plate, and therefore it is possible to mold a tire in which at least a portion of the transverse side surface of the ground contact element is covered by the covering layer, with greater stability.

According to the present invention, the cross-sectional shape of the protrusion of the thin plates is preferably triangular.

According to the present invention having the configuration described above, the cross-sectional shape of the protrusion of the thin plates is triangular, so the thin plates provided with the protrusion are easily separated from the tire after vulcanization molding, and as a result it is possible to mold a tire in which at least a portion of the transverse side surface of the ground contact element is covered by the covering layer, with greater stability.

[Advantage of the Invention]

By virtue of the tire molding element, tire vulcanization mold, and tire of the present invention, it is possible to arrange a covering layer at a predetermined position with greater stability on a ground contact element of the tire, while enabling a greater degree of freedom in the arrangement of the covering layer.

[Brief Description of the Drawings]

[Fig. 1] schematically illustrates a portion of the surface of a tire tread molded by means of a molding element according to a first mode of embodiment of the present invention.
[Fig. 2] is an oblique view schematically illustrating a portion of a ground contact element of the tire tread in fig. 1.
[Fig. 3] is a view in cross section schematically illustrating a green tire on which a covering layer is arranged, and a tire molding element according to a first mode of embodiment of the present invention, corresponding to a portion along the line III-III in fig. 2 and provided in such a way as to mold the tire tread in fig. 2.
[Fig. 4] is an oblique view schematically illustrating a thin plate of the tire molding element in fig. 3.
[Fig. 5] is a view in cross section schematically illustrating a step of the molding employing the tire molding element in fig. 3.
[Fig. 6] is a view in cross section schematically illustrating a step of the molding employing the tire molding element in fig. 3.
[Fig. 7] is a view in cross section schematically illustrating a step of the molding employing the tire molding element in fig. 3.
[Fig. 8] is a view in cross section schematically illustrating a step of the molding employing the tire molding element in fig. 3.
[Fig. 9] is a view in cross section schematically illustrating a molding element according to a second mode of embodiment of the present invention.

[Mode of Embodiment of the Invention]

A tire molding element, a tire vulcanization mold comprising said molding element, and a tire vulcanization molded by means of said mold in accordance with a preferred mode of embodiment of the present invention will be described below with reference to the appended drawings.

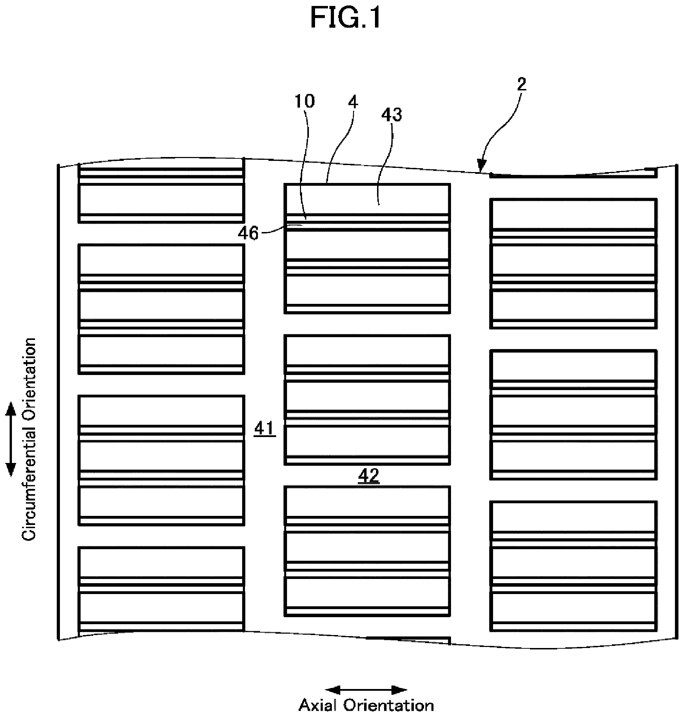

A tire molding element, a tire vulcanization mold comprising said molding element, and a tire vulcanization molded by means of said mold according to a first mode of embodiment of the present invention will be described first of all with the aid of fig. 1 to fig. 8.

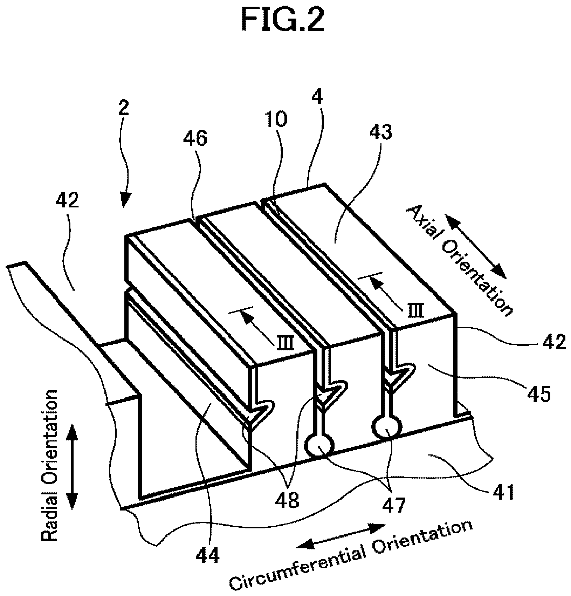

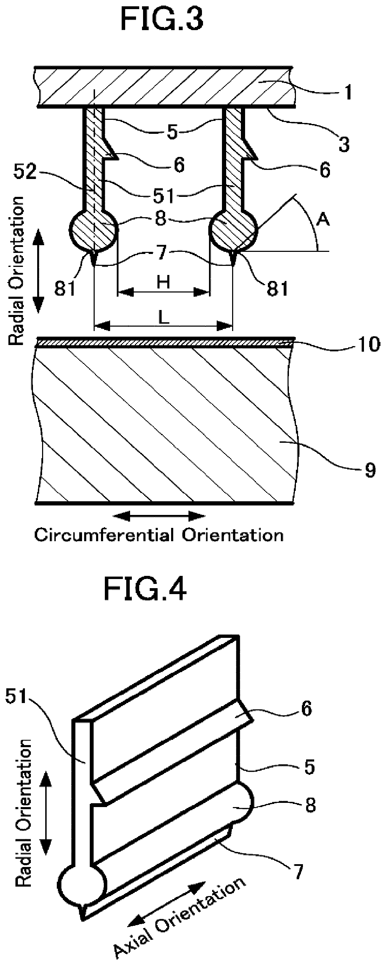

Fig. 1 schematically illustrates a portion of the surface of a tire tread molded by means of the molding element according to a first mode of embodiment of the present invention; fig. 2 is an oblique view schematically illustrating a portion of a ground contact element of the tire tread in fig. 1; fig. 3 is a view in cross section schematically illustrating a green tire on which a covering layer is arranged, and a tire molding element according to a first mode of embodiment of the present invention, corresponding to a portion along the line III-III in fig. 2 and provided in such a way as to mold the tire tread in fig. 2; fig. 4 is an oblique view schematically illustrating a thin plate of the tire molding element in fig. 3; and fig. 5 to fig. 8 are views in cross section schematically illustrating a step of the molding employing the tire molding element. Here, in fig. 1 to fig. 8, the direction of the arrows indicated by Circumferential Orientation denotes the tire circumferential direction (direction of rotation), the direction of the arrows indicated by Axial Orientation denotes the tire axial direction, and the direction of the arrows indicated by Radial Orientation denotes the tire radial direction.

As illustrated in fig. 1 and 2, a plurality of ground contact elements 4 are formed on a tire tread 2, said plurality of ground contact elements 4 being defined by a plurality of circumferential grooves 41 extending in the tire circumferential direction and a plurality of transverse grooves 42 extending in the tire axial direction (tire transverse direction).

The ground contact elements 4 comprise: a ground contact surface 43 which contacts a road surface when the tire is rolling, and a plurality of transverse side surfaces 44 extending in a transverse direction and a plurality of circumferential grooves 45 extending in a circumferential direction, connected to the ground contact surface 43, further comprises two incisions 46 opening in the ground contact surface 43 and the circumferential grooves 41 and extending inwardly in the tire radial direction and in the tire axial direction (tire transverse direction). Here, side surfaces of the incisions 46 extending in the tire radial direction also constitute the transverse side surfaces 44 of the ground contact element 4. Enlarged-width portions 47 of the ground contact element 4 are provided on the inside in the radial direction of the transverse side surface 44 of the incisions 46. A notch 48 is provided in the region of an intermediate portion in the radial direction of one transverse side surface 44 of the incisions 46, and one transverse side surface 44 of the incisions 46 in a range from the notch 48 to the ground contact surface 43, also including a portion of the ground contact surface 43, is covered by a covering layer 10 comprising a different material than that of the ground contact element 4, intended to improve specific tire performance. Moreover, as illustrated in fig. 2, the covering layer 10 is provided only on the transverse side surface 44 in a single direction (specifically the "front side") with respect to the tire rotation direction.

The tire molding element for molding the tread 2 will be described next with the aid of fig. 3 and fig. 4.

As illustrated in fig. 3, a molding surface 3 intended for molding the tread 2 is provided on a surface of the tire molding element 1 opposite a green tire 9 vulcanization molded as a tire by means of the molding element 1. Thin plates 5 extending in the radial direction toward the green tire 9 for forming the incisions 46 in the ground contact elements 4 are provided on the molding surface 3. The thin plates 5 comprise a main body 51 and a protrusion 6 having a substantially triangular cross section is provided in the region of an intermediate portion in the radial direction of the thin plates 5, said protrusion 6 forming the notch 48 in the ground contact element 4, protruding in the thickness direction (tire circumferential direction) of the thin plates 5, and being intended to guide a cut covering layer 10 in the depth direction of the green tire 9 so that the covering layer 10 covers a part or all of the transverse side surface 44 of the ground contact element 4; an enlarged-width portion 8 having a circular cross section and forming an enlarged-width portion 47 of the ground contact element 4 is further provided at an end portion of the thin plates 5 on the opposite side to the molding surface 3, and a cutting means 7 protruding from the enlarged-width portion 8 toward the opposite side to the molding surface 3 and provided in such a way as to cut the covering layer 10 arranged in advance on the unvulcanized green tire 9 is further provided. The thin plates 5 and the main body 51 thereof have a flat plate shape extending linearly in the width direction (tire axial direction) of the thin plates 5, as illustrated in fig. 4.

The enlarged-width portion 8 of the thin plate 5 has a cross-sectional shape with line symmetry, taking a center line 52 of the main body 51 as a reference, and the cross-sectional shape from an end portion 81 on the cutting means 7 side of the enlarged-with portion 8 to a maximum width portion is arcuate. Furthermore, an angle A between an imaginary line parallel to the molding surface 3 passing through an end portion 81 on the cutting means 7 side of the enlarged-width portion 8 of the thin plates 5, and an imaginary line joining the maximum width portion of the enlarged-width portion 8 and the end portion 81 on the cutting means 7 side, is set at between 10° and 80°. In addition, a thickness-direction distance H between enlarged-width portions 8 of adjacent thin plates 5 is set at between 40% and 90% of a distance L between center lines 52 of the main bodies 51 of adjacent thin plates 5. Here, the abovementioned angle A is preferably between 30° and 70°, more preferably between 45° and 60°, and the thickness-direction distance H between enlarged-width portions 8 of adjacent thin plates 5 is preferably between 50% and 90% of the distance L between the center lines 52 of the main bodies 51 of adjacent thin plates 5. The absolute value of the angle A is more preferably equal between enlarged-width portions 8 of two adjacent thin plates 5, or the difference between angles is no greater than 10°. According to this mode of embodiment, the angle A is 45°, and the thickness-direction distance H between enlarged-width portions 8 of adjacent thin plates 5 is 66% of the distance L between the center lines 52 of the main bodies 51 of adjacent thin plates 5.

Examples of materials which may be used as the covering layer 10 include a composition (including a rubber composition) based on a natural resin having a higher elastic modulus than the elastic modulus of the rubber composition which is the constituent material of the ground contact element 4, a material in which fibers are mixed or impregnated with a composition based on a natural resin, a thermoplastic resin, and a laminate or mixture thereof; it is also possible to use a combination of a nonwoven fabric or woven fabric etc. impregnated with a composition based on a natural resin, with the aim of providing further reinforcement or improving adhesion with the ground contact element 4. A fibrous material such as a nonwoven fabric or woven fabric impregnated with a composition based on a natural resin may be used alone as the covering layer 10. According to this mode of embodiment, the rubber composition has a dynamic shear complex modulus (dynamic shear modulus: G*) when subjected to a maximum shear stress of 0.7 MPa at a frequency of 10 Hz and a temperature of -10°C in excess of 200 MPa, with the aim of improving the performance on snow. The storage elastic modulus represented by G' and the loss elastic modulus represented by G", which are dynamic properties known to a person skilled in the art, are measured by means of a viscosity analyzer (viscoanalyzer: Metravib VB4000) using a test piece molded from the raw composition or a test piece which is combined with the composition after vulcanization. The test piece which is used is described in Figure X2.1 (a circular method) of the standard ASTM D 5992-96 (version published September 2006, initially approved in 1996). The diameter "d" of the test piece is 10 mm (consequently the test piece has a circular cross section of 78.5 mm$^2$), the thickness "L" of each part of the rubber compound is 2 mm, and the ratio "d/L" is 5 (described in paragraph X2.4 of the ASTM standard, unlike the ratio "d/L" of 2 recommended in the standard ISO 2856). The test involves recording the response of a test piece comprising a vulcanized rubber composition subjected to a simple alternating sinusoidal shear load at a frequency of 10 Hz. The maximum shear stress reached during the test is 0.7 MPa. The measurement is taken by varying the temperature from Tmin, which is a temperature lower than the glass transition temperature (Tg) of the rubber material, to a maximum temperature Tmax in the vicinity of 100°C, at a rate of 1.5°C per minute. The test piece is stabilized for approximately 20 minutes at Tmin prior to the start of the test in order to obtain a satisfactory uniformity of temperature within the test piece. The results obtained are the storage elastic modulus (G') and the loss elastic modulus (G") at the prescribed temperature. The complex elastic modulus G* is defined in terms of the absolute values of the storage elastic modulus and the loss elastic modulus using the following formula:

[Numerical Formula 1]

$$G^* = \sqrt{G'^2 + G''^2}$$

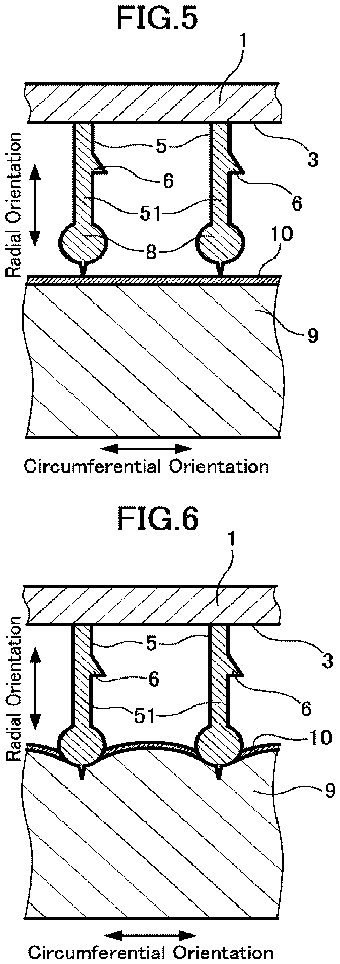

Molding of the tire tread using the tire molding element according to this mode of embodiment will be described next with the aid of fig. 5 to fig. 8.

As a first step illustrated in fig. 5, the cutting means 7 of the thin plates 5 provided on the tire molding element 1 according to this mode of embodiment, which protrudes from the enlarged-width portion 8 provided at the end portion on the opposite side to the molding surface 3 toward the opposite side to the molding surface 3 and is provided in such a way as to cut the covering layer 10 arranged in advance on the unvulcanized green tire 9, is placed in contact with the covering layer 10, and the covering layer 10 is cut to a predetermined length by the cutting means 7 of two adjacent thin plates 5.

Next, as a second step illustrated in fig. 6, the molding element 1 is pushed forward and inwardly in the radial direction toward the green tire 9, and the covering layer 10 cut to a predetermined length in the first step remains together with a portion of the green tire 9 in a space between the enlarged-width portions 8 of two thin plates 5 on the opposite side to the molding surface 3 in the region of maximum width of the enlarged-width portions 8.

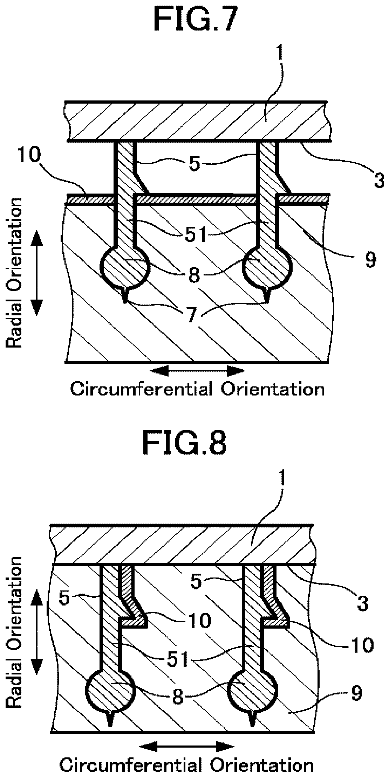

Next, as a third step illustrated in fig. 7, the molding element 1 is pushed further forward and inwardly in the radial direction toward the green tire 9, and the covering layer 10 cut to a predetermined length in the first step and remaining together with a portion of the green tire 9 in the space between the enlarged-width portions 8 of two thin plates 5 on the opposite side to the molding surface 3 in the region of maximum width of the enlarged-width portions 8, is pushed forward as far as the protrusion 6 protruding in the thickness direction of the thin plates 5.

In addition, as a fourth step illustrated in fig. 8, the tire molding element 1 is pushed further forward inwardly in the radial direction toward the green tire 9, and the covering layer 10 cut to a predetermined length in the first step, remaining together with a portion of the green tire 9 in the space between the enlarged-width portions 8 of two thin plates 5 on the opposite side to the molding surface 3 in the region of maximum width of the enlarged-width portions 8, and then pushed forward as far as the protrusion 6 protruding in the thickness direction of the thin plates 5, is guided in the depth direction of the green tire 9 by means of the protrusion 6 while sliding on the surface of the green tire 9 in such a way as to cover a part or all of the transverse side surface 44 of the ground contact element 4, and vulcanization molding is performed in this state.

The effect of the tire molding element according to this mode of embodiment will be described next.

With the tire molding element 1 according to this mode of embodiment, the thin plates 5 comprising the main body 51 are provided with the protrusion 6 that protrudes from the main body 51 of said thin plates 5 in the thickness direction of the thin plates 5, said thin plates 5 being provided in such a way as to cut the covering layer 10 without the use of the blade described in abovementioned Patent Documents 1 and 2, so the cut covering layer 10 arranged in advance on the unvulcanized green tire 9 is guided in the green tire 9 depth direction by means of the protrusion 6 on the thin plates 5, and therefore it is possible to increase the degree of freedom in the arrangement of the covering layer 10 that covers the ground contact element 4 on the tire.

In addition, at least two adjacent thin plates 5 comprise the enlarged-width portion 8 provided at the end portion on the opposite side to the molding surface 3, and the cutting means 7 protruding from the enlarged-width portion 8 toward the opposite side to the molding surface 3, and therefore the covering layer 10 which has been cut by the cutting means 7 remains in the space on the opposite side to the molding surface 3 in the region of maximum width of the enlarged-width portion 8 between two enlarged-width portions 8, after which the covering layer 10 is pushed out in the direction of the molding surface 3 by means of the green tire 9, then caught by means of the protrusion 6 protruding in the thickness direction of the thin plates 5, and guided in the depth direction of the green tire in such a way as to cover a part or all of the transverse side surface 44 of the ground contact element 4, and therefore even if the covering layer 10 has not been simultaneously cut by the cutting means 7, it is still possible to reduce the risk of the covering layer 10 being dragged by the thin plate 5 on the wrong side, and the covering layer 10 can be stably arranged at a predetermined position with greater reliability.

Furthermore, the cross-sectional shape of the protrusion 6 of the thin plates 5 is substantially triangular, so the thin plates 5 provided with the protrusion 6 are easily separated from the tire after vulcanization molding, and as a result it is possible to mold a tire in which a part or all of the transverse side surface 44 of the ground contact element 4 is covered by the covering layer 10, with greater stability.

In addition, the cross-sectional shape of the enlarged-width portions 8 of adjacent thin plates 5 has line symmetry, taking the center line of the main body 51 of the thin plates 5 as a reference, so the enlarged-width portion 8 of the thin plates 5 which is exposed to the greatest amount of stress during vulcanization molding and which is in contact with the green tire 9 for the longest time has a stable shape in relation to the thin plate 5, and therefore it is possible to mold a tire in which a part or all of the transverse side surface 44 of the ground contact element 4 is covered by the covering layer 10, with greater stability.

The thickness-direction distance $H$ between enlarged-width portions 8 of adjacent thin plates 5 is set at no less than 40% of the distance $L$ between the center lines 52 of the main bodies 51 of adjacent thin plates, and therefore it is possible to prevent the covering layer 10 cut to a predetermined length by the cutting means 7 from deforming under excessive stress while it remains in the space between two enlarged-width portions on the opposite side to the molding surface 3 in the region of maximum width of the enlarged-width portions 8, and the covering layer 10 can be stably arranged at a predetermined position with greater reliability. Furthermore, the distance H is set at no greater than 90% of the distance L, and therefore it is possible to reduce the risk of the covering layer 10 being dragged by the thin plate 5 on the wrong side.

In addition, the angle $A$ between an imaginary line parallel to the molding surface 3 passing through an end portion 81 on the cutting means 7 side of the enlarged-width portion 8 of the thin plates 5, and an imaginary line joining the maximum width portion of the enlarged-width portion 8 and the end portion 81 on the cutting means 7 side, is set at between 10° and 80°, and therefore it is possible to stably arrange the covering layer 10 at a predetermined position with greater reliability. That is to say, if the angle $A$ is smaller than 10°, the cut covering layer 10 remaining in the space on the opposite side to the molding surface 3 in the region of maximum width between enlarged-width portions 8 of two thin plates 5 is not readily pushed out in the molding surface 3 direction, the cut covering layer 10 deforms as a result of a large amount of stress being applied thereto, and there is a risk of it not being possible to stably arrange the covering layer 10 at a predetermined position; on the other hand, if this angle $A$ is greater than 80°, the cut covering layer 10 does not readily remain in the space on the opposite side to the molding surface 3 in the region of maximum width between enlarged-width portions of two plates 5, and there is a risk of it not being possible to stably arrange the covering layer 10 at a predetermined position, so the abovementioned range is preferred.

A variant example of this mode of embodiment will be described next.

The cutting means 7 provided on the enlarged-width portions 8 may have a saw blade shape in the width direction (= tire axial direction) of the thin plates 5.

Furthermore, the shape of the thin plates 5 may be modified in such a way that the incision 44 from when said incision 44 is formed by the thin plates 5 in the ground contact surface 41 of the ground contact element 4 has an arcuate shape, a serrated shape, or a combination of a serrated shape and straight lines, when seen in a plan view of the ground contact surface of the ground surface element 4.

Furthermore, the protrusion 6 that protrudes in the thickness direction of the thin plates 5 may be formed in such a way as to be discontinuous from the main body 51 of the thin plates 5 in the width direction (= tire axial direction) of the thin plates 5.

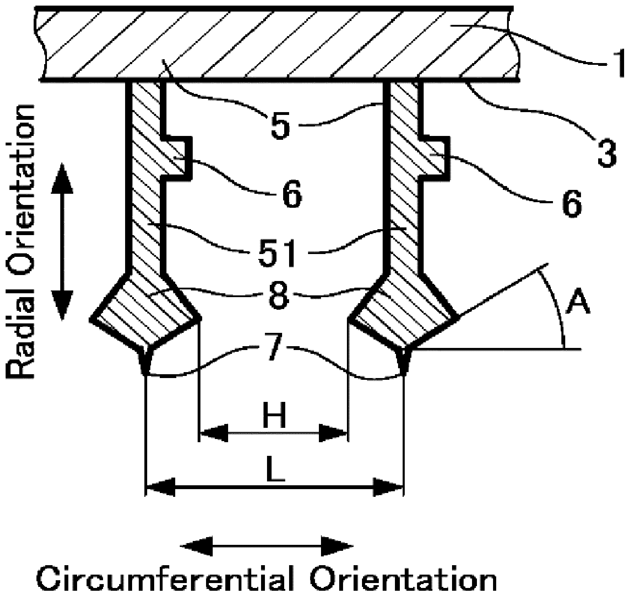

A tire molding element according to a second mode of embodiment of the present invention will be described next with the aid of fig. 9. Fig. 9 is a view in cross section schematically illustrating a tire molding element according to a second mode of embodiment of the present invention. In the same way as in fig. 3, the direction of the arrows indicated by Circumferential Orientation in fig. 9 denotes the tire circumferential direction (direction of rotation), and the direction of the arrow indicated by Radial Orientation denotes the tire radial direction. It should be noted that the description of the second mode of embodiment relates to structural elements which are different than those of the abovementioned first mode of embodiment, and structural elements which are the same will not be described again.

As illustrated in fig. 9, the tire molding element 1 according to the second mode of embodiment is provided with the molding surface 3 intended for molding the tread 2, on the surface of the tire molding element 1 opposite the green tire 9 (not depicted) which is vulcanization molded as a tire, in the same way as the molding element 1 according to the abovementioned first mode of embodiment. The thin plates 5 which extend in the radial direction toward the green tire 9, form the incisions 46 in the ground contact element 4 and comprise the main body 51 are provided on the molding surface 3, and the protrusion 6 having a substantially square cross section is provided in the region of an intermediate portion in the radial direction of the main body 51, said protrusion 6 forming the notch 48 in the ground contact element 4, protruding in the thickness direction (tire circumferential direction) of the thin plates 5, and being intended to guide the cut covering layer 10 in the depth direction of the green tire 9 so that the covering layer 10 covers a part or all of the transverse side surface 44 of the ground contact element 4; the enlarged-width portion 8 having a substantially diamond-shaped cross section and forming the enlarged-width portion 47 of the ground contact element 4 is further provided at an end portion of the thin plates 5 on the opposite side to the molding surface 3, and the cutting means 7 protruding from the enlarged-width portion 8 toward the opposite side to the molding surface 3 and for cutting the covering layer 10 arranged on the unvulcanized green tire 9 is further provided.

The cross-sectional shape of the enlarged-width portion 8 of the thin plates 5 has line symmetry, taking the center line 52 of the main body 51 of the thin plates 5 as a reference, the cross-sectional shape from the end portion 81 on the cutting means 7 side of the enlarged-width portion 8 to the maximum width portion of the enlarged-width portion 8 is linear, and the angle A between an imaginary line parallel to the molding surface 3 passing through the end portion 81 on the cutting means 7 side, and an imaginary line joining the maximum width portion of the enlarged-width portion 8 and the end portion 81 of the cutting means 7 is set in such a way as to be between 10° and 80°, while the thickness-direction H between enlarged-width portions 8 of adjacent thin plates 5 is set in such a way as to be between 40% and 90% of the distance L between the center lines 52 of the main bodies 51 of adjacent thin plates 5. The angle A is preferably between 30° and 60°, and the thickness-direction distance H between enlarged-width portions 8 of adjacent thin plates 5 is preferably between 50% and 90% of the distance L between the center lines 52 of the main bodies 51 of adjacent thin plates 5. According to this mode of embodiment, the angle A is 35°, and the thickness-direction distance H between enlarged-width portions 8 of adjacent thin plates 5 is 58% of the distance L between the center lines 52 of the main bodies 51 of adjacent thin plates 5.

The effect of the tire molding element according to the abovementioned second mode of embodiment will be described next.

In the tire molding element 1 according to the second mode of embodiment, the cross-sectional shape from the end portion 81 on the cutting means 7 side of the enlarged-width portion 8 of the thin plates 5 is linear, and as a result the space on the opposite side to the molding surface 3 in the region of maximum width of the enlarged-width portions 8 between the enlarged-width portions 8 of two thin plates 5 decreases linearly toward the molding surface 3, and therefore it is possible to stably arrange the covering layer 10 at a predetermined position with greater reliability.

Particularly preferred modes of embodiment of the present invention were described above, but the present invention is not limited to the modes of embodiment illustrated and a number of modifications and variations are possible within the scope of the patent claims.

[Key to Symbols]

1 Tire molding element
2 Tire tread
3 Molding surface
4 Ground contact element
41 Circumferential groove
42 Transverse groove
43 Ground contact surface
44 Transverse side surface
45 Circumferential side surface
46 Incision
47 Enlarged-width portion
48 Notch
5 Thin plate
51 Main body
52 Center line
6 Protrusion
7 Cutting means
8 Enlarged-width portion
81 End portion
9 Green tire
10 Covering layer

**Claims**

1. A tire molding element (1) for vulcanization molding a tire tread (2), comprising:

a molding surface (3) for molding a plurality of ground contact elements (4) of the tread (2), comprising a ground contact surface (43) which contacts a road surface, and a transverse side surface (44) and a circumferential side surface (45) connected to said ground contact surface (43); and
a plurality of thin plates (5) comprising a main body (51), provided in such a way as to cut a covering layer (10) arranged in advance on an unvulcanized green tire (9), wherein
at least one thin plate (5) comprises a protrusion (6) which protrudes from the main body (51) in the thickness direction of the thin plate (5) and guides the cut covering layer (10) in the depth direction of the green tire (9) in such a way as to cover at least a portion of the transverse side surface (44) of the ground contact element (4), **characterized in that**
at least two adjacent thin plates (5) comprise an enlarged-width portion (8) provided at an end portion on the opposite side to the molding surface (3), and a cutting means (7) protruding from the enlarged-width portion (8) toward the opposite side to the molding surface (3).

2. The tire molding element (1) according to claim 1, wherein a thickness-direction distance H between enlarged-width portions (8) of adjacent thin plates (5) is between 40% and 90% of a distance L between main body (51) center lines (52) of adjacent thin plates (5).

3. The tire molding element (1) according to claim 1 or 2, wherein an angle A between an imaginary line parallel to the molding surface (3) passing through an end portion (81) on the cutting means (7) side of the enlarged-width portion (8) of the thin plate (5), and an imaginary line joining the maximum width portion of the enlarged-width portion (8) and the end portion on the cutting means (7) side, is between 10°and 80°.

4. The tire molding element (1) according to claim 3, wherein the cross-sectional shape from the end portion (81) on the cutting means (7) side of the enlarged-width portion (8) of the thin plate (5) to the maximum width portion is arcuate.

5. The tire molding element (1) according to claim 3, wherein the cross-sectional shape from the end portion (81) on the cutting means (7) side of the enlarged-width portion (8) of the thin plate (5) to the maximum width portion is linear.

6. The tire molding element (1) according to any one of claims 1 to 5, wherein the cross-sectional shape of the enlarged-width portion (8) of the thin plate (5) has line symmetry, taking the main body (51) center line (52) as a reference.

7. The tire molding element (1) according to any one of claims 1 to 6, wherein the cross-sectional shape of the protrusion (6) of the thin plate (5) is triangular.

8. A tire vulcanization mold **characterized in that** it comprises at least one tire molding element (1) according to any one of claims 1 to 7.

9. A tire **characterized in that** it is vulcanization molded by means of the tire vulcanization mold according to claim 8.

**Patentansprüche**

1. Reifenformelement (1) zum Vulkanisationsformen einer Reifenlauffläche (2), umfassend:

eine Formfläche (3) zum Formen einer Mehrzahl von Bodenkontaktelementen (4) der Lauffläche (2), umfassend eine Bodenkontaktfläche (43), welche eine Straßenoberfläche berührt, und eine Querseitenfläche (44) und eine Umfangsseitenfläche (45), die mit der Bodenkontaktfläche (43) verbunden sind; und

eine Mehrzahl von dünnen Platten (5), die einen Hauptkörper (51) umfassen, der derart vorgesehen ist, dass er eine Deckschicht (10) durchschneidet, die vorab auf einem unvulkanisierten Reifenrohling (9) angeordnet wird, wobei mindestens eine dünne Platte (5) einen Vorsprung (6) umfasst, der vom Hauptkörper (51) in der Dickenrichtung der dünnen Platte (5) vorsteht und die durchgeschnittene Deckschicht (10) in der Tiefenrichtung des Reifenrohlings (9) derart führt, dass sie wenigstens einen Abschnitt der Querseitenfläche (44) des Bodenkontaktelements (4) abdeckt, **dadurch gekennzeichnet, dass** mindestens zwei benachbarte dünne Platten (5) einen Abschnitt vergrößerter Breite (8), der an einem Endabschnitt auf der gegenüberliegenden Seite zur Formfläche (3) vorgesehen ist, und ein Schneidmittel (7) umfassen, das vom Abschnitt vergrößerter Breite (8) in Richtung der gegenüberliegenden Seite zur Formfläche (3) vorsteht.

2. Reifenformelement (1) nach Anspruch 1, wobei ein Dickenrichtungsabstand H zwischen Abschnitten vergrößerter Breite (8) von benachbarten dünnen Platten (5) 40 % bis 90 % eines Abstands L zwischen Hauptkörper (51)-Mittellinien (52) von benachbarten dünnen Platten (5) beträgt.

3. Reifenformelement (1) nach Anspruch 1 oder 2, wobei ein Winkel A zwischen einer imaginären Linie parallel zur Formfläche (3), die durch den Endabschnitt (81) auf der Schneidmittel (7)-Seite des Abschnitts vergrößerter Breite (8) der dünnen Platte (5) verläuft, und einer imaginären Linie, die den Abschnitt größter Breite des Abschnitts vergrößerter Breite (8) und den Endabschnitt auf der Schneidmittel (7)-Seite verbindet, 10° bis 80° beträgt.

4. Reifenformelement (1) nach Anspruch 3, wobei die Querschnittsform des Endabschnitts (81) auf der Schneidmittel (7)-Seite des Abschnitts vergrößerter Breite (8) der dünnen Platte (5) zum Abschnitt größter Breite bogenförmig ist.

5. Reifenformelement (1) nach Anspruch 3, wobei die Querschnittsform des Endabschnitts (81) auf der Schneidmittel (7)-Seite des Abschnitts vergrößerter Breite (8) der dünnen Platte (5) zum Abschnitt größter Breite linear ist.

6. Reifenformelement (1) nach einem der Ansprüche 1 bis 5, wobei die Querschnittsform des Abschnitts vergrößerter Breite (8) der dünnen Platte (5) Liniensymmetrie aufweist, wenn die Hauptkörper (51)-Mittellinie (52) als Referenz herangezogen wird.

7. Reifenformelement (1) nach einem der Ansprüche 1 bis 6, wobei die Querschnittsform des Vorsprungs (6) der dünnen Platte (5) dreieckig ist.

8. Reifenvulkanisierform, **dadurch gekennzeichnet, dass** sie mindesten ein Reifenformelement (1) nach einem der Ansprüche 1 bis 7 umfasst.

9. Reifen, **dadurch gekennzeichnet, dass** er mittels der Reifenvulkanisierform nach Anspruch 8 vulkanisationsgeformt ist.

## Revendications

1. Elément de moulage pour pneu (1) qui est destiné au moulage par vulcanisation d'une bande de roulement (2), comprenant :

   une surface de moulage (3) pour le moulage d'une pluralité d'éléments de contact au sol (4) de la bande de roulement (2), comprenant une surface de contact au sol (43) qui vient au contact d'une surface de route, et une surface latérale transversale (44) et une surface latérale circonférentielle (45) reliée à ladite surface de contact au sol (43) ; et
   une pluralité de minces plaques (5) comprenant un corps principal (51), prévu de manière à couper une couche de revêtement (10) pré-agencée sur un pneu brut non vulcanisé (9), dans lequel
   au moins une mince plaque (5) comprend une saillie (6) qui fait saillie à partir du corps principal (51) dans le sens de l'épaisseur de la mince plaque (5) et qui guide la couche de revêtement coupée (10) dans le sens de la profondeur du pneu brut (9) de manière à recouvrir au moins une partie de la surface latérale transversale (44) de l'élément de contact au sol (4), **caractérisé en ce que**
   au moins deux minces plaques adjacentes (5) comprennent une partie élargie (8) prévue au niveau d'une partie d'extrémité sur le côté opposé à la surface de moulage (3), et des moyens de coupe (7) faisant saillie à partir de la partie élargie (8) vers le côté opposé à la surface de moulage (3).

2. Elément de moulage pour pneu (1) selon la revendication 1, dans lequel une distance dans le sens de l'épaisseur H entre des parties élargies (8) de minces plaques adjacentes (5) est comprise entre 40% et 90% d'une distance L entre des lignes centrales (52) du corps principal (51) de minces plaques adjacentes (5).

3. Elément de moulage pour pneu (1) selon la revendication 1 ou 2, dans lequel un angle A entre une ligne imaginaire parallèle à la surface de moulage (3) traversant une partie d'extrémité (81) sur le côté des moyens de coupe (7) de la partie élargie (8) de la mince plaque (5), et une ligne imaginaire qui joint la partie de largeur maximale de la partie élargie (8) et la partie d'extrémité sur le côté des moyens de coupe (7), est compris entre 10° et 80°.

4. Elément de moulage pour pneu (1) selon la revendication 3, dans lequel la forme de section transversale allant de la partie d'extrémité (81) sur le côté des moyens de coupe (7) de la partie élargie (8) de la mince plaque (5) jusqu'à la partie de largeur maximale est arquée.

5. Elément de moulage pour pneu (1) selon la revendication 3, dans lequel la forme de section transversale allant de la partie d'extrémité (81) sur le côté des moyens de coupe (7) de la partie élargie (8) de la mince plaque (5) jusqu'à la partie de largeur maximale est linéaire.

6. Elément de moulage pour pneu (1) selon l'une quelconque des revendications 1 à 5, dans lequel la forme de section transversale de la partie élargie (8) de la mince plaque (5) présente une symétrie de ligne, qui prend comme référence la ligne centrale (52) du corps principal (51).

7. Elément de moulage pour pneu (1) selon l'une quelconque des revendications 1 à 6, dans lequel la forme de section transversale de la saillie (6) de la mince plaque (5) est triangulaire.

8. Moule pour vulcanisation de pneu **caractérisé en ce qu'**il comprend au moins un élément de moulage pour pneu (1) selon l'une quelconque des revendications 1 à 7.

9. Pneu **caractérisé en ce qu'**il est moulé par vulcanisation au moyen du moule pour vulcanisation de pneu selon la revendication 8.

# FIG.1

# FIG.2

# FIG.3

# FIG.4

# FIG.5

Radial Orientation

Circumferential Orientation

# FIG.6

Radial Orientation

Circumferential Orientation

# FIG.7

# FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03089257 A
- WO 2013088570 A
- WO 2013087826 A
- WO 2014198654 A
- WO 2014102076 A